Europäisches Patentamt

European Patent Office

Office européen des brevets

(19)

(11) **EP 0 751 482 B1**

(12) **FASCICULE DE BREVET EUROPEEN**

(45) Date de publication et mention
de la délivrance du brevet:
**02.05.2003 Bulletin 2003/18**

(51) Int Cl.⁷: **G06T 5/00**

(21) Numéro de dépôt: **96201774.5**

(22) Date de dépôt: **26.06.1996**

(54) **Procédé de filtrage temporel du bruit dans une image d'une séquence d'images numériques et dispositif mettant en oeuvre ce procédé**

Verfahren und Vorrichtung zur temporären Rauschfilterung einer Bildfolge

Method and apparatus for temporal filtering of noise in an image sequence

(84) Etats contractants désignés:
**DE FR GB NL**

(30) Priorité: **30.06.1995 FR 9507888**

(43) Date de publication de la demande:
**02.01.1997 Bulletin 1997/01**

(73) Titulaire: **Koninklijke Philips Electronics N.V.
5621 BA Eindhoven (NL)**

(72) Inventeur: **Makram-Ebeid, Shérif
75008 Paris (FR)**

(74) Mandataire: **Lottin, Claudine et al
Société Civile S.P.I.D.
156, Boulevard Haussmann
75008 Paris (FR)**

(56) Documents cités:
**WO-A-92/22876**

• **IEEE TRANSACTIONS ON SIGNAL
PROCESSING, vol. 39, no. 5, Mai 1991, USA,
pages 1146-1163, XP002016556 ARCE G R:
"Multistage Order Statistic Filters for Image
Sequence Processing."**

EP 0 751 482 B1

## Description

## FIELD OF THE INVENTION

L'invention concerne un procédé de filtrage temporel du bruit dans une image d'une séquence d'images numériques, ainsi qu'un dispositif pour mettre en oeuvre ce procédé.

L'invention trouve particulièrement son application dans le traitement d'images médicales formées dans un mode fluoroscopique de rayons X, au moyen d'un système où le faisceau de rayons X a une faible intensité, fournissant sous forme de séquence des images bruitées et peu contrastées qui doivent être filtrées afin d'en extraire le bruit, sans en détériorer les détails.

Le filtrage temporel consiste à lisser un signal monodimensionnel appelé signal temporel, constitué par les valeurs d'intensité d'un pixel ayant une localisation donnée dans les images de la séquence, en fonction du temps.

## BACKGROUND OF THE INVENTION

Un procédé de filtrage temporel est déjà connu par la publication de R.E.KALMAN, intitulée "A new approach to linear filtering and prediction problems" dans "Transactions of the ASME, Journal of Basic Engineering, Series 82D, pp. 35-45, 1960.

Le filtrage de Kalman est défini par une équation récursive donnant l'intensité filtrées d'un pixel courant d'une image de la séquence en fonction d'hypothèses faites A PRIORI, en fonction de l'intensité du pixel de même localisation dans l'image précédente de la séquence et en fonction d'un facteur appelé gain de Kalman.

Cette équation peut conduire à deux algorithmes récursifs. Un problème est que, dès qu'il se produit un petit mouvement entre deux images, ce mouvement donne lieu à un front montant ou descendant, appelé discontinuité d'intensité, apparaissant sur la courbe dudit signal temporel à lisser.

Dans le premier algorithme, le gain de Kalman est choisi complètement constant : il en résulte un traînage exponentiel affectant ledit front de discontinuité d'intensité résultant d'un mouvement. Ainsi, dans l'image d'origine bruitée, un petit objet, comme par exemple un cathéter, qui aurait bougé rapidement donnant lieu à un créneau du signal d'intensité, peut avoir disparu de l'image filtrée parce que les flancs du créneau sont déformés par le filtrage. Cet algorithme efface les petits objets en mouvement.

Dans le second algorithme, le gain de Kalman est une fonction de la différence entre l'intensité bruitée observée à un instant donné et l'intensité filtrée à l'instant précédent, pour un pixel de localisation donnée. Il en résulte que le signal temporel est lissé avant la discontinuité, mais que, par contre, il n'est plus filtré après la discontinuité ; il existe donc un legs de bruit après le front de discontinuité d'intensité.

Le filtrage temporel connu a donc le désavantage de ne pas pouvoir être appliqué efficacement à une séquence d'images fortement bruitées représentant des petits objets animés.

Ainsi, le filtrage temporel connu ne résout pas certains problèmes importants qui se posent lorsque le filtrage temporel est appliqué à une séquence d'images obtenues en mode fluoroscopique de rayons X, utilisée, par exemple, pour suivre en temps réel une opération médicale durant laquelle un outil de diamètre extrêmement petit, tel qu'un cathéter, est introduit ou déplacé dans la zone observée.

## SUMMARY OF THE INVENTION

Un problème est que, dû à la très faible intensité du faisceau fluoroscopique de rayons X, les images de la séquence sont extrêmement bruitées, et contiennent fréquemment des pics de bruit.

Un autre problème est que, dû au fait que chaque image de la séquence est séparée de la suivante par un petit laps de temps, un événement important comme le déplacement d'un petit outil tel qu'un cathéter, peut survenir d'une image à l'autre. Le filtrage de l'image où apparaît le mouvement de ce petit objet ne doit pas déformer ou effacer cet objet.

La présente invention vise à fournir un procédé de filtrage temporel pour la réduction du bruit, dans les images successives d'une séquence d'images numérisées :

qui travaille strictement en temps réel, c'est-à-dire qui fournisse l'image courante filtrée dès l'apparition de ladite image courante observée, immédiatement, sans retard d'image, quelle que soit la cadence des images dans la séquence,

qui réduise les legs de bruit suivant un front de discontinuité du signal temporel d'intensité, sans amortir le front de discontinuité ;

qui soit capable de réduire les pics de bruit ;

qui n'efface pas et ne déforme pas les petits objets en mouvement.

Ces buts sont atteints au moyen d'un procédé de filtrage temporel du bruit dans une image appelée image du présent, d'une séquence d'images en forme de matrices bidimensionnelles de pixels, lesquels ont des valeurs d'intensité, appelées échantillons bruitées numérisées,

ce procédé comprenant l'évaluation d'un échantillon filtré appelé échantillon causal filtré du présent, pour reconstruire un échantillon bruité correspondant à un pixel de localisation donné, dans l'image du présent, par une combinaison linéaire de l'échantillon bruité du présent et des échantillons antérieurs dans la séquence, appelés échantillons causals bruités affectés de poids qui sont des coefficients de probabilité de continuité d'intensité, de 0 (zéro) à 1, entre ledit échantillon causal bruité auquel le poids est affecté et l'échantillon bruité du présent, le poids affecté à l'échantillon bruité du présent ayant la valeur 1.

Un dispositif pour mettre en oeuvre ce procédé de filtrage comprend :

un système de traitement d'images pour fournir une intensité numérisée bruitée appelée échantillon du présent bruité, d'un pixel ayant une localisation donnée dans une image ayant la forme d'une matrice de pixels arrivant à cet instant du présent,

et un sous-ensemble, appelé sous-ensemble causal, recevant à son entrée l'échantillon bruité du présent, incluant une mémoire pour fournir une intensité numérisée appelée échantillon causal bruité ou filtré du pixel antérieur au pixel du présent, de même localisation dans la matrice de l'image antérieure, une mémoire pour fournir un facteur de gain causal, et des moyens de calcul pour évaluer l'équation d'intégration causale, et pour fournir à sa sortie la valeur de l'échantillon causal filtré du présent, qui est l'échantillon filtré pour reconstruire l'échantillon du présent bruité.

Ce dispositif offre l'avantage d'être simple à mettre en oeuvre et de fournir strictement et exactement en temps réel un filtrage temporel du bruit efficace qui ne détruit pas les détails de l'image.

## BRIEF DESCRIPTION OF THE DRAWINGS

L'invention est décrite ci-après en détail, en référence avec les figures schématiques annexées dont :

la FIG.1 qui représente un dispositif de prises de vues à rayons X ;
la FIG.2 qui représente une séquence d'images numériques ;
la FIG.3A qui représente un signal temporel bruité correspondant à un pixel A localisé aux coordonnées x,y, avec une discontinuité due à un mouvement ;
la FIG.3B qui représente un autre signal temporel bruité, avec un pic de bruit ;
la FIG.4A qui représente un signal temporel filtré correspondant au signal temporel bruité de la FIG.3A ;
la FIG.4B qui représente un signal temporel filtré correspondant au signal bruité de la FIG.3B ;
la FIG.4C qui représente un signal temporel filtré correspondant au signal temporel bruité de la FIG.3A, selon une variante de l'invention
les FIG.5A à 5C qui illustrent une détermination de l'écart type du bruit $\sigma_B$ par rapport à la moyenne du bruit $m_B$ ;
les FIG.6A à 6D qui montrent divers exemples possibles de la fonction $F^C(Z^C)$ ;
la FIG.7 qui montre sous forme de blocs fonctionnels, un dispositif pour mettre en oeuvre le procédé de filtrage temporel.

## DESCRIPTION OF THE PREFERRED EMBODIMENTS

### I/ Dispositif à rayons X

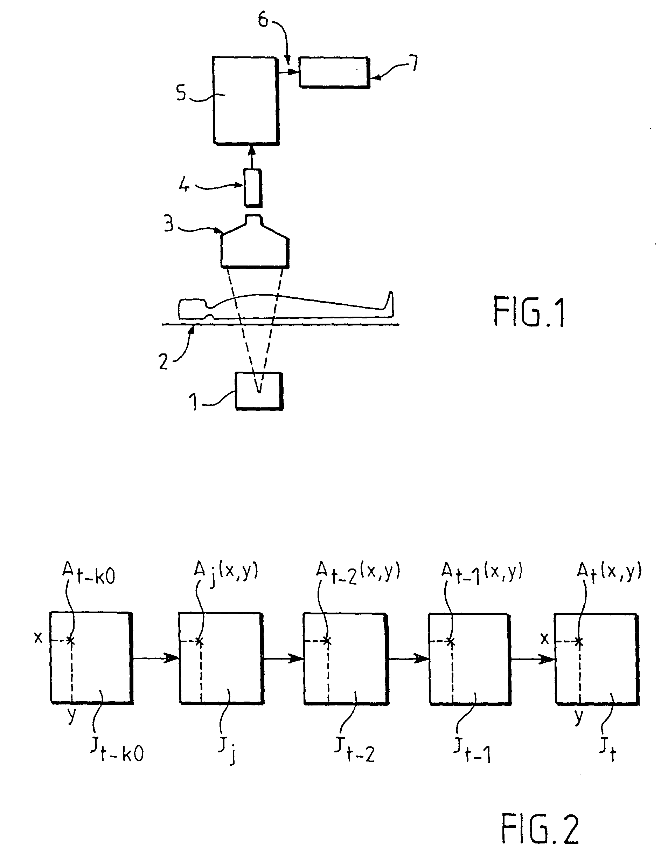

En référence avec la FIG.1, un système de radiographie numérisée comprend une source de rayons X ; une table mobile 2 pour recevoir un patient ; un dispositif intensificateur d'image 3 couplé à un tube vidéo 4, qui fournit des données à un système 5 de traitement numérique d'image comprenant un microprocesseur. Ce dernier comprend plusieurs sorties dont une sortie 6 couplée à un moniteur 7 pour la visualisation de la séquence d'images radiographiques ou des images d'intensité.

L'image radiographique numérisée peut contenir 512 x 512 ou 1024 x 1024 pixels codés sur 8bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé.

L'image numérisée peut être obtenue en mode fluoroscopique. L'invention peut trouver son application particulièrement dans le filtrage d'images angiographiques.

Dans tous les cas, la présente invention ne tient pas compte de la méthode par laquelle la séquence d'images numériques a été obtenue, ni de la nature des objets qu'elle représente, mais concerne seulement le filtrage de ces images dans cette séquence pour éliminer le bruit.

**II/ Procédé de filtrage temporel du bruit**

La présente invention propose un procédé de filtrage temporel du bruit successivement de chaque image d'une séquence d'images numériques bruitées. Ce procédé opère le filtrage de la dernière image bruitée observée. Ce procédé est donc exactement mené à bien en temps réel.

Ce procédé est capable d'effectuer la détection de mouvement d'objets enregistrés sur les images de la séquence. Il est fondé sur des étapes de filtrage récursif adaptatif.

En référence avec la figure 2, le procédé de filtrage temporel du bruit comporte d'abord l'acquisition et la numérisation d'une séquence d'images bruitées, réalisée à une cadence donnée.

Cette séquence est composée, de l'instant le plus éloigné dans le passé, jusqu'à l'instant le plus récent :

d'un nombre d'images d'intensité du passé, notées $J_j^C$ appelées "images causales", formées depuis le premier instant $j = t-k_o$, où $k_o$ est un nombre entier égal au nombre d'images de la séquence moins un, jusqu'à l'instant $j = t-1$, où t est l'instant où arrive l'image en cours de filtrage ;
d'une image $J_t^P$ en cours de filtrage, appelée image du présent, arrivant à l'instant $j = t$.

Chaque image numérisée bruitée $J_j$ est une matrice bidimensionnelle de pixels notés $A_j (x, y)$, caractérisé chacun par ses coordonnées x, y dans la matrice et par un niveau d'intensité $I_j(x, y)$ sur une échelle de niveaux d'intensité, où j est l'indice correspondant à celui de l'image.

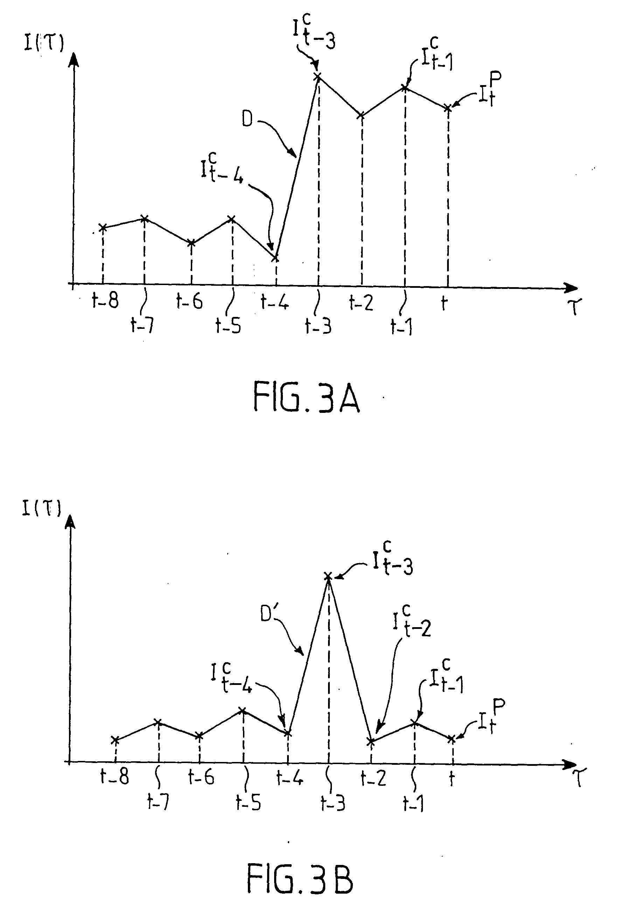

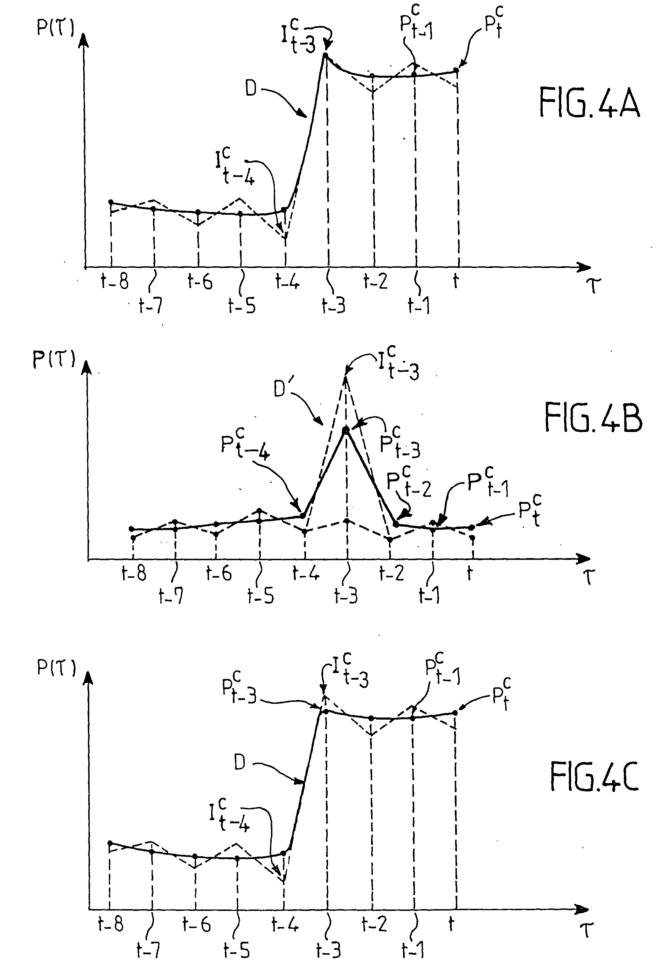

Un signal, appelé signal temporel bruité, est formé des différents niveaux d'intensité $I_j (x, y)$ des pixels $A_j (x, y)$ en fonction du temps $\tau$ (lire tau), comme représenté sur les FIG.3A et 3B, où l'intensité I est portée en ordonnée et $\tau$ en abscisse. Le procédé de filtrage temporel selon l'invention a pour objet le filtrage ou lissage du bruit qui affecte ce signal temporel noté $I(\tau)$, de manière à obtenir un signal temporel filtré, noté $P(\tau)$, comme représenté sur les FIG. 4A et 4C. On appelle ci-après "échantillons" ces intensités qui sont les points du signal temporel $I(\tau)$. Les intensités du passé ou causales sont notées $I_j^C$ et l'intensité du présent est notée $I_t^P$.

Le procédé selon l'invention s'applique au cas où les grands mouvements se produisant dans la séquence d'image ont déjà été compensés par des méthodes de compensation de mouvement connus de l'état de la technique, Par exemple des méthodes de correction de translations. On évitera cependant les méthodes d'estimation de mouvement coûteuses en temps de calcul. Ce genre de méthode doit être évitée puisque l'invention vise la fourniture d'un procédé applicable **strictement** en temps réel.

Il faut noter que, même lorsqu'un procédé de compensation de mouvement a été ainsi appliqué sur une séquence d'images, on ne peut jamais affirmer que les mouvements aient été réellement tous compensés, parce que les techniques de compensation de mouvement ne sont pas parfaites.

Pour prendre en compte cet état de fait, le présent procédé effectue un filtrage du bruit du signal temporel $I(\tau)$ en traitant les petits mouvements locaux résiduels ou non compensables des objets dans la séquence d'image.

Ce procédé effectue un filtrage de l'échantillon bruité $I_t^P$ arrivé à l'instant du présent t, et construit un échantillon filtré $P_t^C$ en utilisant l'échantillon bruité $I_t^P$ du présent t, et les échantillons antérieurs appelés échantillons causals bruités $I_{t-k0}^C, \dots I_{t-3}^C, I_{t-2}^C, I_{t-1}^C$, observés aux instants du passé de $t-k_o$ à $t-1$.

Le filtrage temporel est effectué favorablement pour chaque pixel $A_j (x, y)$ de la matrice bidimensionnelle, aux différentes coordonnées x, y, individuellement.

La figure 3A montre un signal temporel $I(\tau)$ bruité ayant, à titre d'exemple, une discontinuité d'intensité D entre l'échantillon $I_{t-3}^C$ et l'échantillon $I_{t-4}^C$ due à un petit mouvement local. Ce petit mouvement se traduit par un front de montée du signal temporel $I(\tau)$ entre l'instant t-2 et l'instant t-3, un "haut plateau" de signal entre les instants t-3 et t, et une "plaine basse" aux instants précédant l'instant t-4.

Le filtrage temporel selon l'invention est capable de s'adapter à une discontinuité d'intensité telle que D. Ainsi, les FIG.4A et 4C montrent le signal temporel $P(\tau)$ lissé par le procédé selon l'invention dans diverses formes de réalisation.

Ce signal temporel montre en outre des petites dents de scie entre les instants t-8 et t-4, car, dû au bruit, le niveau d'intensité d'un pixel de mêmes coordonnées (x,y) dans les images de la séquence varie constamment, provoquant un aspect de chute de neige. Le filtrage permet de supprimer cet aspect en lissant à une valeur moyenne constante le signal temporel $I(\tau)$ relatif à un pixel donné.

La FIG.3B montre par ailleurs un signal temporel bruité $I(\tau)$ ayant à titre d'exemple un pic de bruit D' apparaissant entre les instants t-4 et t-2, c'est-à-dire à l'instant t-3. Un pic de bruit tel que D' se distingue d'une discontinuité d'intensité telle que D de la FIG.3A, par le fait qu'il ne correspond pas à un phénomène de mouvement spatial réel. Un tel pic de bruit peut être filtré par le procédé proposé selon l'invention.

L'échantillon filtré $P_t^C$ correspondant à l'échantillon bruité du présent $I_t^P$ s'exprime par la relation (1) :

$$P_t^C = \frac{\sum\limits_{j=t-ko}^{j=t-1} b_j^C \times I_j^C + I_t^P}{\sum\limits_{j=t-ko}^{j=t-1} b_j^C + 1} \qquad (1)$$

L'échantillon filtré $P_t^C$, ou signal temporel filtré à l'instant t, est une combinaison linéaire des échantillons bruités observés aux instants causaux de $j = t-k_o$ jusqu'à $j = t-1$, et de l'échantillon bruité observé à l'instant t.

Dans la formule (1) du signal filtré $P_t^C$, on affecte aux échantillons causaux $I_{t-1}^C$, $I_{t-2}^C$ etc.., un poids $b_j^C$.

Le dénominateur de la formule (1) est un facteur de normalisation dont la présence est fondée sur le fait que la somme des poids que l'on applique aux différents échantillons doit être égale à 1 pour que la moyenne du signal filtré $P_t^C$ soit égale à la moyenne du signal bruité $I_t^P$.

Le procédé de filtrage temporel est fondé sur une combinaison linéaire des échantillons causals, avec l'échantillon du présent, dans laquelle les poids $b_j^C$, affectés aux échantillons causaux ont une forme spécifique, le poids affecté à l'échantillon du présent étant 1.

Le poids affecté à un échantillon causal donné est une probabilité de continuité d'intensité entre ledit échantillon causal donné et l'échantillon du présent.

D'une manière générale, la formulation du poids causal $b_{t-k}^C$ à affecter à un échantillon causal $I_{t-k}^C$ est donnée par la relation (2) :

$$b_{t-k}^C = \prod\limits_{t-k+1}^{t} \alpha_j^C, \text{ avec } k \rangle 1 \qquad (2)$$

où $\alpha_j^C$ est la probabilité de continuité d'intensité entre les échantillons causaux successifs depuis $I_{t-k}^C$ jusqu'à $I_t^P$. La relation (2) exprime qu'un poids $b_{t-k}^C$ relatif à un échantillon causal $I_{t-k}^C$ est égal au produit de toutes les probabilités de continuité d'intensité $\alpha_j^C$ depuis l'instant causal j=t-k+1 jusqu'à l'instant du présent t.

Ainsi, la détermination du poids affecté à un échantillon causal donné de la formulation (1) est fondée sur l'hypothèse que ledit échantillon donné est retenu et pris en compte dans la combinaison linéaire seulement dans la mesure où il n'est pas trop différent de l'échantillon du présent, cela signifiant qu'il appartient au même objet.

Selon cette hypothèse, par exemple, la formulation du poids causal $b_{t-1}^C$, relatif à l'échantillon causal $I_{t-1}^C$, se fait en écrivant que $b_{t-1}^C$ est une fonction de la valeur absolue de la différence entre l'échantillon $I_t^P$ à l'instant présent et l'échantillon $I_{t-1}^C$ à l'instant précédent.

De préférence, le poids causal $b_{t-1}^C$ est une fonction de la différence :

$$\Delta^C = |I_t^P - P_{t-1}^C| \qquad (6C)$$

où $P_{t-1}^C$ est l'échantillon déjà filtré à l'instant précédent t-1, et donc réputé moins bruité que $I_{t-1}^C$ du fait du filtrage. Si la différence entre les échantillons $I_t^P$ et $P_{t-1}^C$ est faible, on affecte au poids correspondant $b_{t-1}^C$ une valeur "élevée" proche de 1. Si cette différence est grande, alors on affecte au poids $b_{t-1}^C$ une valeur proche de 0 (zéro). Dans ce cas, l'échantillon $I_{t-1}^C$ n'est pratiquement pas pris en compte.

Ensuite, dans cet exemple, la formulation du second poids $b_{t-2}^C$ causal relatif à l'échantillon causal $I_{t-2}^C$ se fait en écrivant que le poids $b_{t-2}^C$ est une fonction non seulement de la différence entre l'échantillon à l'instant t et l'échantillon à l'instant t-1, mais aussi est une fonction de la différence entre l'échantillon à l'instant t-1, et l'échantillon à l'instant t-2. Ainsi, le poids $b_{t-2}^C$ a une valeur élevée proche de 1, si on ne prend en compte que des échantillons n'ayant pas subi de modifications autres que celles dues au bruit par rapport à l'échantillon du présent $I_t^P$, c'est-à-dire si l'on pose comme condition que les différences entre les échantillons pris en compte sont faibles. Ceci conduit à la formulation des poids causaux $b_j^C$ comme des produits de fonctions des différences d'intensité apparaissant sur le signal temporel, c'est-à-dire à la formulation de ces poids comme des produits de probabilité de continuité d'intensité entre les échantillons précédant l'échantillon du présent à filtrer.

Ainsi, la formulation du poids causal relatif à l'échantillon $I_{t-1}^C$ est :

$$b_{t-1}^{C} = \alpha_t^{C} \qquad (2a)$$

où $\alpha_t^{C}$ est une probabilité de continuité d'intensité entre l'échantillon du présent $I_t^{C}$ et l'échantillon filtré $P_{t-1}^{C}$. La continuité d'intensité entre l'échantillon à l'instant t et l'échantillon à l'instant précédent t-1 se traduit par une probabilité de continuité $\alpha_t^{C}$ forte. Et une discontinuité d'intensité entre les échantillons se traduit par $\alpha_t^{C}$ proche de 0.

La formulation du poids causal relatif à l'échantillon $I_{t-2}^{C}$ est :

$$b_{t-12}^{C} = \alpha_t^{C} \times \alpha_{t-1}^{C} \qquad (2b)$$

où $\alpha_{t-1}^{C}$ est la probabilité de continuité d'intensité entre l'échantillon à l'instant t-1 et l'échantillon à l'instant t-2.

La continuité d'intensité des échantillons entre l'instant t et l'instant t-2 implique la continuité d'intensité entre les instants t et t-1, et la continuité d'intensité entre les instants t-1 et t-2, ce qui se traduit par le produit de probabilités (2b) dans lequel la probabilité de continuité d'intensité entre les instants t et t-1 est forte, et la probabilité de continuité d'intensité entre les instants t-1 et t-2 est forte.

La formulation du poids causal relatif à l'échantillon $I_{t-3}^{C}$ est ensuite :

$$b_{t-3}^{C} = \alpha_{t-2}^{C} \times \alpha_{t-1}^{C} \ 1 \times \alpha t \qquad (2c)$$

etc.

Ainsi dans l'exemple de la FIG.3A, du fait de la discontinuité d'intensité D entre les échantillons $I_{t-4}^{C}$ et $I_{t-3}^{C}$, la probabilité de continuité $\alpha_{t-3}^{C}$ est très proche de 0 (zéro). Le poids $b_{t-4}^{C}$ obtenu par le produit des probabilités incluant cette probabilité $\alpha_{t-3}^{C}$ tend également vers zéro. Ensuite le poids $b_{t-5}^{C}$ tend aussi vers zéro du fait que sa formulation est un produit contenant aussi cette probabilité proche de zéro. Dès qu'il y a une probabilité proche de zéro dans le produit des probabilités fournissant un poids $b_{j}^{C}$, la présence de cette probabilité annule ce produit et tous les produits correspondant aux instants qui précèdent l'instant où cette probabilité proche de zéro apparaît. Il en résulte que les poids $b^{C}$ des échantillons causals correspondant auxdits instants précédents sont aussi proches de zéro. Dans l'exemple particulier de la FIG. 3A, les poids causals sont : $b_{t-1}^{C} \simeq 1$ ; $b_{t-2}^{C} \simeq 1$ ; $b_{t-3}^{C} \simeq 1$ ; $b_{t-4}^{C} \simeq 0$ ; $b_{t-5}^{C} \simeq 0$

Il en résulte que, par cette formulation spécifique (2) des coefficients causals $b_{j}^{C}$, l'équation (1), dont le calcul était très complexe, est transformée en un seul groupe de 3 relations simples réalisant le filtrage temporel recherché.

L'équation linéaire (1), dans laquelle les poids causals ont une forme spécifique (2) conduit à une formulation de l'équation **récursive** $(3^{C})$ suivante :

$$P_t^{C} = P_{t-1}^{C} + K_t^{C} \times (I_t^{P} - P_{t-1}^{C}) \qquad (3c)$$

Cette équation $(3^{C})$ appelée équation d'intégration, prend en compte l'échantillon causal filtré $P_{t-1}^{C}$ à l'instant t-1, modifié par ce qu'on appelle ci-après un terme d'innovation causal constitué par la différence entre l'échantillon filtré $P_{t-1}^{C}$ à l'instant t-1 et l'échantillon bruité $I_t^{P}$ observé à l'instant du présent t. Ce terme d'innovation est multiplié par un terme appelé gain causal $K_t^{C}$, qui varie entre 0 et 1. Cette première équation $(3^{C})$ fournit une valeur filtrée $P_t^{C}$ qui est l'échantillon filtré recherché.

Le gain causal $K_t^{C}$ n'est pas un gain de Kalman, mais un facteur de gain complètement différent donné par l'équation récursive suivante $(4^{C})$ :

$$K_t^{C} = \frac{K_{t-1}^{C}}{K_{t-1}^{C} + \alpha_t^{C}} \qquad (4c)$$

Dans le passage entre les équations (1) et (2) et les équations $(3^{C})$ et $(4^{C})$, le gain causal est l'inverse de la somme des poids causals

$$K_t^{C} = 1 / \sum_{j=t-ko}^{j=t-1} b_j^{C}$$

et de plus, comme on vu plus haut :

$$\alpha_t^C = b_{t-1}^C \qquad (2a)$$

qui exprime que la probabilité de continuité $\alpha_t^C$ est le poids de l'échantillon causal $I_{t-1}^C$ précédant l'échantillon $I_t^P$ du présent, probabilité qui est appelée ci-après coefficient causal de continuité.

Le passage entre les équations (1) + (2) et l'équation (3$^C$) est alors fondé sur le système d'équations causales :

$$P_t^C = P_{t-1}^C + K_t^C \times (I_t - P_{t-1}^C) \quad \text{équation d'intégration} \qquad (3c)$$

$$K_t^C = \frac{K_{t-1}^C}{K_{t-1}^C + \alpha_t^C} \quad \text{facteur de gain causal} \qquad (4c)$$

et

$$\alpha_t^C = F^C \left( \frac{\Delta^C}{S_t^C} \right) \quad \text{coefficient causal de continuité} \qquad (5c)$$

où $S_t^C$ est un facteur de normalisation, et où $F^C$ est une fonction définie plus loin.

L'itération de l'équation (3$^C$), en commençant à t-ko dans le temps, permet de retrouver exactement l'équation (1), telle que formulée plus haut.

La formulation (3$^C$) de l'équation d'intégration correspond donc directement à cette combinaison linéaire (1) des échantillons associés à des poids spécifiques qui sont des fonctions de continuité d'intensité entre les échantillons successifs et qui sont déterminés par le produit des probabilités de continuité (2) entre les échantillons successifs, de l'échantillon dont le poids est calculé jusqu'à l'échantillon du présent.

## Formulation du coefficient de discontinuité causal $\alpha_t^C$

Le coefficient causal de continuité $\alpha_t^C$ est défini comme une fonction de la différence

$$\Delta^C = |I_t^P - P_{t-1}^C| \qquad (6C)$$

Il convient de déterminer si la différence $\Delta^C$ est relative à une discontinuité telle que D sur la FIG.3A, ou si elle est seulement relative à du bruit.

Pour déterminer la participation du bruit, la différence $\Delta^C$ est normalisée par un facteur $S_t^C$ prenant en compte la variance du bruit relative à chaque échantillon de cette discontinuité $\Delta^C$. L'écart type du bruit, noté $\sigma_B$, mesuré en niveaux d'intensité, pour chaque échantillon, peut être estimé par toute méthode connue de l'état de la technique, ou bien peut être estimé a priori.

On rappelle que la variance $\sigma_B^2$ du bruit est la moyenne des écarts au carré du bruit dans une région considérée de l'image, les écart d'intensité dus au bruit étant mesurés par rapport à la moyenne d'intensité locale.

La détermination de l'écart type du bruit peut se trouver compliquée du fait que dans le système de la FIG.1 on introduit une transformation de l'image selon une loi de compression des niveaux d'intensité faibles et élevés avant la numérisation du signal pour tenir compte du fait que le bruit est moins visible à l'oeil dans les régions très sombres ou très brillantes, que dans les régions d'intensité moyenne. L'écart type du bruit $\sigma_B$ est alors une fonction de l'intensité à chaque instant, en chaque pixel.

La détermination de l'écart type du bruit doit donc être faite localement en chacun des pixels de l'image, en fonction de la moyenne d'intensité de la région correspondante : ainsi le bruit est caractérisé spatialement du fait que l'on calcule localement une variance du bruit et une moyenne du signal observé, et on arrive donc à séparer ce qui est dû à l'image même, ou signal, du bruit.

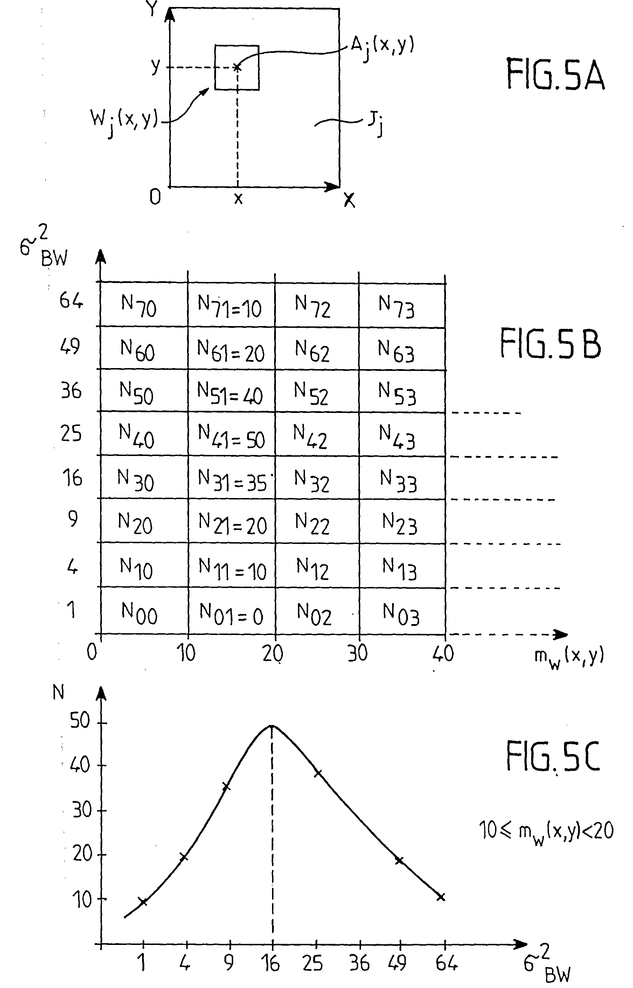

Selon une méthode proposée à titre d'exemple, en référence avec la FIG.5A, on détermine dans une image $J_j$ des petites fenêtre $W_j$, typiquement des zones de 5 x 5 ou 3 x 3 pixels autour de chaque pixel $A_j(x,y)$. Et dans chacune de ces petites fenêtres $W_j(x,y)$, on détermine la variance du bruit et la moyenne d'intensité observé.

A cet effet, n étant le nombre de pixels d'une petite fenêtre $W_j(x,y)$, pour chaque position de cette petite fenêtre centrée sur un pixel $A_j(x,y,)$, on détermine :

les intensités $I_j(k,\ell)$ de chacun des pixels de la petite fenêtre $W_j(x,y)$, les indices k et $\ell$ étant les coordonnées des pixels considérés situés dans cette fenêtre par rapport aux coordonnées rectangulaires X et Y de l'image $J_j$ ;
la moyenne d'intensité $m_W(x,y)$ dans cette fenêtre, en cette position, donnée par la relation :

$$m_W(x,y) = \frac{1}{n} \sum I_j(k,\ell) \qquad (8^C)$$

la variance du bruit $\sigma_{BW}(x,y)$ au carré, dans cette fenêtre, donnée par la relation :

$$\sigma_{BW}^2(x,y)^2 = \frac{1}{n} \Sigma [I_j(k,\ell) - m_W(x,y)]^2 \qquad (9C)$$

où interviennent sous le signe somme $\Sigma$ la différence au carré entre les intensités de chaque pixel de la fenêtre et la moyenne $m_W(x,y)$ ; on prend en outre la moyenne de cette somme par le nombre n de pixels dans la fenêtre.

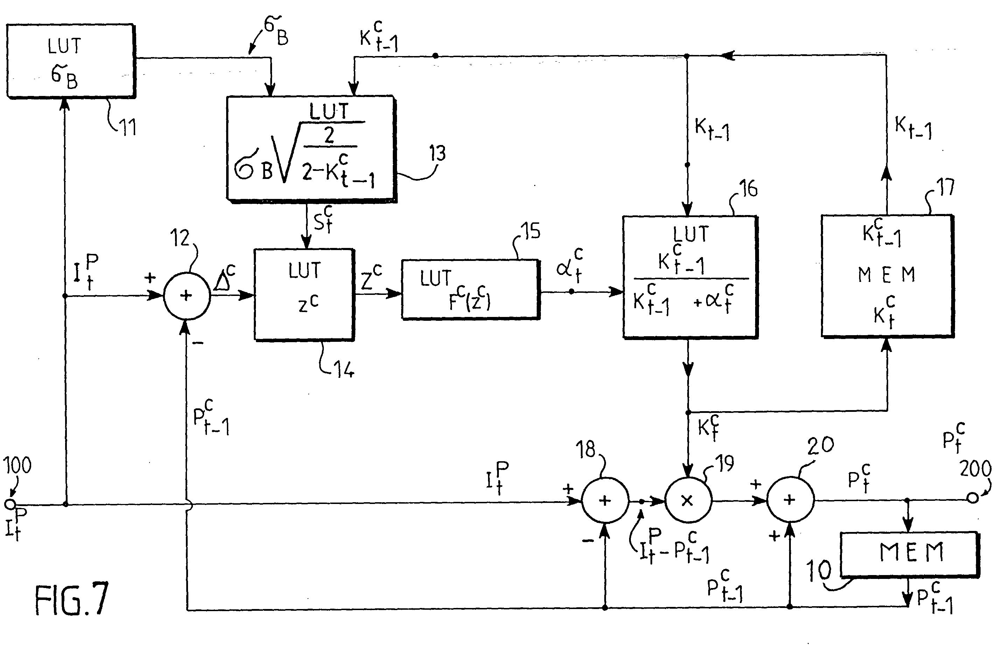

En référence avec la FIG.5B, on réalise ensuite un histogramme à deux dimensions dans lequel on porte sur l'axe horizontal des valeurs moyennes $m_W(x,y)$ de l'intensité avec une précision donnée : par exemple de 10 niveaux de gris en 10 niveaux de gris, et sur l'axe vertical la valeur moyenne de la variance. Dans chaque intervalle de la moyenne d'intensité $m_W(x,y)$ porté sur l'axe horizontal, on trouve le décompte de la fréquence N de la variance ou nombre de fois qu'une variance donnée se produit pour cet intervalle de la moyenne d'intensité. Tout à fait à titre d'exemple, pour la clarté de l'exposé, sur la FIG.7B, on a représenté qu'entre les valeurs 10 et 20 de la moyenne $m_W(x,y)$:

la fréquence $N_{01}$ de la variance ayant la valeur 1 est 0
la fréquence $N_{11}$ de la variance ayant la valeur 4 est 10
la fréquence $N_{21}$ de la variance ayant la valeur 9 est 20
la fréquence $N_{31}$ de la variance ayant la valeur 16 est 35
la fréquence $N_{41}$ de la variance ayant la valeur 25 est etc..

La méthode proposée se poursuit en référence avec la FIG.5C par le tracé de la courbe de la fréquence N d'occurrence des variances portée sur l'axe vertical en fonction de la variance $\sigma_{BW}^2(x,y)$, pour tout intervalle considéré de l'intensité moyenne $m_W(x,y)$. Cette courbe des fréquences N en fonction de la variance passe par un maximum qui donne une valeur possible de la variance, et qui doit être déterminé pour chacun des intervalles de la moyenne d'intensité.

On obtient ainsi une variance du bruit en fonction de la valeur moyenne d'intensité attribuée à chaque pixel $A_j(x,y)$. Cette technique permet d'extraire l'information concernant le bruit à partir de l'image même.

L'écart type du bruit $\sigma_B$ est alors obtenu par le calcul de la racine carrée de la variance du bruit :

$$\sigma_B = \sqrt{\frac{1}{n} \sum_{j=t-N+1}^{j=t} (I_j^C - m_W)^2} \qquad (10^C)$$

La variance de la contribution du bruit entrant dans la différence $\Delta^C$ peut être formulée par :

$$\sigma_B^2 \times \frac{2}{2-K_{t-1}^C}$$

en régime stationnaire ; cette valeur est utilisée comme une approximation pour la normalisation de $\Delta^C$. Le facteur de normalisation de la différence $\Delta^C$ est alors donnée par la relation :

$$S_t^C = \sigma_B \sqrt{\frac{2}{2-K_{t-1}^C}} \qquad (11C)$$

Dans l'équation (5$^C$), le coefficient de continuité $\alpha_t^C$ est donc une fonction d'une différence $\Delta^C$ donnée par la relation (6$^C$), normalisée par une approximation $S_t^C$ de l'écart type du bruit $\sigma_B$, pour prendre en compte le fait que la différence $\Delta^C$ est affectée par le bruit. A cet effet, le calcul du coefficient $\alpha_t^C$ comprend, en chaque point de la courbe I($\tau$) du signal temporel, la détermination de l'écart du bruit $\sigma_B$ par rapport à la moyenne.

La force du procédé de filtrage proposé selon l'invention, fondé sur le calcul de la fonction d'intégration causale (3$^C$) associée aux relations (4$^C$) et (5$^C$), réside tout particulièrement dans le fait que l'expression $\alpha_t^C$ est normalisée comme proposé. Puisque l'on a pris en compte, pour cette normalisation non seulement la variance du bruit de l'échantillon du présent I$_t^P$ mais aussi la variance du bruit de l'échantillon filtré P$_{t-1}^C$, l'équation (5$^C$) donnant le facteur de gain, permet une estimation du bruit résiduel pour chaque échantillon filtré.

La fonction d'intégration récursive (3$^C$) est maintenant aisément calculable car elle dépend uniquement du facteur de gain K$_t^C$ donné par l'équation (4$^C$). Ce facteur de gain K$_t^C$ dépend lui-même uniquement du facteur de gain K$_{t-1}^C$ déjà calculé dans le passé et du coefficient de continuité $\alpha_t^{Ct}$. Ce coefficient de continuité $\alpha_t^C$ dépend aussi du facteur de gain déjà calculé K$_{t-1}^C$, d'où il résulte que ce coefficient de continuité $\alpha_t^C$ doit être d'abord calculé, que l'équation de gain K$_t^C$ est ensuite aisément calculable avec le coefficient de continuité $\alpha_t^{Ct}$, et que l'échantillon filtré P$_t^C$ est ensuite aisément calculable par la relation (3$^C$).

### Définition de la fonction F$^C$

Pour le calcul de l'équation (5$^C$) donnant $\alpha_t^C$ =, la fonction F$^C$ est maintenant définie ci-après.

L'argument de la fonction F$^C$ est noté z$^C$ :

$$z^C = \frac{\Delta^C}{S_t^C} = \left| \frac{I_t^P - P_{t-1}^C}{\sigma_B \sqrt{\dfrac{2}{2-K_{t-1}^c}}} \right| \qquad (12c)$$

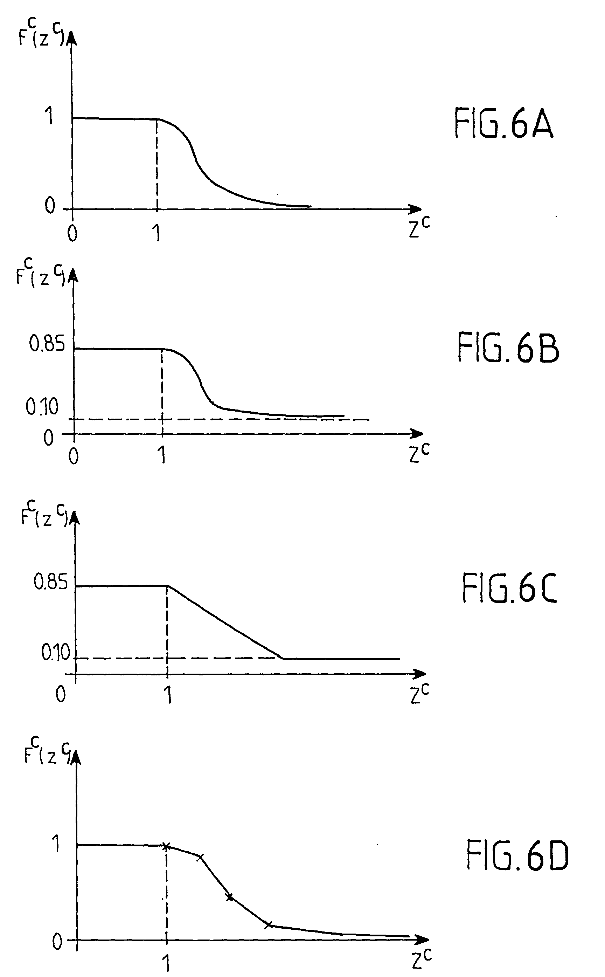

La fonction F$^c$(z$^c$) est tracée à titre d'exemple sur les FIG.6A à 6D en portant ses valeurs en ordonnée, et en portant z$^C$ en abscisse.

La fonction F$^c$(z$^c$) a d'abord une valeur constante F$^c$max lorsque $0 \leq z^C \leq 1$ ; puis la fonction F$^c$(z$^c$) est décroissante jusqu'à une valeur F$^c$min pour $1 < z^C$. La valeur F$^c$max est telle que : F$^c$max $\leq 1$. La valeur F$^c$min est telle que $0 \leq$ F$^c$min. Des exemples de telles fonctions F$^c$(z$^c$) sont donnés ci-après.

Exemple I : illustré par la FIG.6A

La fonction F$^c$(z$^c$) est constante et égale à une valeur F$^c$max = 1 quand $0 \leq z^C \leq 1$, puis la fonction F$^c$(z$^c$) est choisie décroissante jusqu'à une valeur F$^c$min = 0 quand $1 \leq z^C$. La fonction F$^c$(z$^c$) est avantageusement, dans cette région, de la forme d'une Gaussienne affectée d'un facteur de normalisation, telle que : quand $1 \leq z^C$, alors

$$F^c(z^c) = \exp\left(\frac{(z^c)^2}{0{,}75}\right)$$

Exemple II : illustré par la FIG.6B

La fonction F$^c$(z$^c$) est constante et égale à une valeur F$^c$max inférieure à 1, par exemple F$^c$max = 0,85 quand $0 \leq z^C < 1$ ; puis la fonction F$^c$(z$^c$) est décroissante quand $1 \leq z^C$. La fonction F$^c$(z$^c$) est limitée en décroissance par exemple à = 0,10. La fonction F$^c$(z$^c$) peut être, dans ce cas, une Gaussienne décalée.

Exemple III : illustré par la FIG.6C

La fonction F$^c$(z$^c$) est constante et égale à une valeur F$^c$max inférieure à 1, mais proche de 1, telle que F$^c$max = 0,85 lorsque $0 \geq z^C \geq 1$. Puis la fonction F$^c$(z) est linéairement décroissante jusqu'à une valeur Fmin proche de 0, par exemple F$^c$min = 0,10, qu'elle atteint par exemple pour z$^C$ = 2. Ensuite la fonction F$^c$(z$^c$) est linéairement constante et égale à F$^c$min = 0,10 pour $2 < z^C$

Exemple IV : illustré par la FIG.6D

La fonction $F^c(z^c)$ est une fonction linéaire par morceaux qui est une approximation de la fonction de l'exemple I, ou bien de la fonction de l'exemple II.

La fonction $F^c(z^c)$ peut encore être choisie parmi d'autres formes appropriées dont la définition est à la portée de l'homme du métier.

La fonction $F^c(z^c)$ règle la puissance de filtrage. Lorsque $F^c\text{max} = 1$, la puissance de filtrage est maximale. Lorsque $F^c\text{max}$ est inférieure à 1, la puissance de filtrage est légèrement limitée. Lorsque $F^c\text{min}$ est supérieure à zéro, la puissance de filtrage n'est jamais nulle.

## Exemple de réalisation de l'invention avec une fonction $F^C$ de l'exemple I

Les FIG.4A et 4C montrent chacune un signal temporel filtré $P(\tau)$ obtenu à partir d'un signal temporel bruité $I(\tau)$ ayant au moins une discontinuité d'intensité D due à un mouvement, tel qu'illustré par la FIG.3A.

Ce filtrage est effectué au moyen du système de filtrage $(3^C)$, $(4^C)$, $(5^C)$ dans les conditions où $F^C(Z^C)$ est une fonction analogue à celle de l'exemple I illustrée par la FIG.6A.

En référence avec la FIG.4A, le filtrage causal produit un lissage du signal temporel, à gauche de la discontinuité D, dans le sens causal de t-4 vers t-ko ; ensuite, du fait de la discontinuité D, le filtrage causal n'est pas capable de réaliser le filtrage de l'échantillon bruité $I^C_{t-3}$ en t-3, car il a "oublié" le passé constitué par les échantillons $I^C_{t-5}$, etc ; de sorte que le filtrage causal est très efficace en $I^C_{t-4}$ de la courbe de signal temporel et à gauche de cet échantillon, puis le signal est directement le signal bruité $I^C_{t-3}$, en t-3, car en ce point, le filtrage causal ne fournit que l'intensité bruitée observée, non modifiée par les données du passé. Ensuite le filtrage causal produit à nouveau un signal très bien lissé à droite de l'échantillon $I^C_{t-3}$, à partir du point suivant, en t-2, du signal temporel, où l'échantillon en t-3 peut être pris en compte du fait qu'il n'y a pas de discontinuité d'intensité entre les instants t-3 et t-2.

Donc, il reste après filtrage causal, tel que montré sur la FIG.4A, la première dent de bruit en $I^C_{t-3}$ à l'instant t-3 du fait que les coefficients $b^C_{t-4}$ affectés au signal en t-4 sont nuls puisque la différence d'intensité entre t-3 et t-4 est grande.

D'autre part, en référence avec la FIG.3B, le signal temporel bruité $I(\tau)$ peut montrer aussi un pic de bruit D' par exemple apparaissant à l'instant t-3. Le filtrage causal ne permet pas de distinguer la discontinuité D' due à un pic de bruit dans le signal temporel bruité de la FIG.3B, de la discontinuité D due à un mouvement dans le signal temporel bruité de la FIG.3A. Donc le filtrage causal ne permet pas de bien filtrer un pic de bruit D' tel que montré sur la FIG. 3B si la fonction choisie $F^C(Z^C)$ est celle de l'exemple I illustrées par les FIG.7A.

## Exemple de réalisation de l'invention avec une fonction $F^C$ de l'exemple II

Selon l'invention, on peut modifier à volonté la puissance de filtrage en modifiant les valeurs de $F^c\text{min}$, et $F^c\text{max}$, de manière à diminuer au mieux la dent d'intensité bruitée résiduelle, obtenue à droite de la discontinuité d'intensité D du signal temporel dans l'exemple précédent, tout en conservant un lissage aussi parfait que possible de ce signal temporel.

Ainsi, selon l'invention, le passé peut n'être oublié que "dans une certaine mesure", d'où il résulte que le filtrage causal peut n'être pas complètement nul en $I^C_{t-3}$.

En référence avec la FIG.4C qui est le résultat du filtrage du signal de la FIG.3A en utilisant une fonction $F^C$ $(z^C)$ ayant $F^c\text{max} = 0,85$ et $F^c\text{min} = 0,10$, illustrées par la FIG.6B, on montre que la première dent de bruit en $I^C_{t-3}$ après la discontinuité D est amortie du fait que la fonction $F^C(Z^C)$ n'est jamais nulle, puisque dans cet exemple au moins égale à 0,10. Donc les données au temps t-4 sont toujours prises en compte et permettent de filtrer toujours dans une certaine mesure le signal au temps t-3, après la discontinuité d'intensité D.

Par ailleurs, comme on a vu précédemment, on peut aussi modifier à volonté la puissance de filtrage en modifiant les valeurs $F^C_{min}$ et $F^C_{max}$ pour filtrer un pic de bruit D' tel que montré sur la FIG.3B.

Ainsi, considérant la FIG.4B qui est le résultat du filtrage du signal de la FIG.3B en utilisant une fonction $F^C$ $(Z^C)$ ayant $F^c\text{max} = 0,85$ et $F^c\text{min} = 0,10$, illustrées par la FIG.6B, le pic de bruit D' est amorti du fait que la fonction $F^C(Z^C)$ n'est jamais nulle, car les données au temps t-4 sont toujours prises en compte et permettent de filtrer toujours dans une certaine mesure le signal du pic de bruit D', au temps t-3.

On notera que la première image filtrée est en fait la deuxième image arrivant dans la séquence puisque l'on a besoin des données de l'image précédente pour filtrer l'image courante. Les données de la première image de la séquence ne sont pas filtrées pour leurs propres affichages et ne sont pas filtrées pour l'utilisation du filtrage de l'image arrivant en deuxième. Le filtrage réel commence à cette deuxième image.

**III/ Dispositif pour mettre en oeuvre le procédé**

En référence avec la FIG. 7, un dispositif simple pour mettre en oeuvre le procédé de filtrage temporel précédemment décrit, est représenté sous forme de blocs fonctionnels.

Pour l'image du présent à l'instant t, l'intensité bruitée $I_t^P$ d'un pixel de localisation x,y est amenée à l'entrée 100 du dispositif.

Cette intensité bruitée $I_t^P$ suit deux voies.

Dans une voie, le signal bruité $I_t^P$ est amené vers une fonction $\sigma_B$ tabulée dans une Table LUT 11 (en anglais, LUT = LOOK UP TABLE) qui fournit l'écart type du bruit $\sigma_B$ du signal bruité $I_t^P$. L'écart type du bruit $\sigma_B$ est disponible à la sortie de la Table 11.

Les gains K sont stockés dans la mémoire MEM 17. Cette mémoire MEM 17 a une sortie pour fournir les gains $K_{t-1}^C$ de l'instant précédent, pour le pixel de localisation donnée x,y, et a une entrée pour recevoir les gains $K_t^C$ calculés pour l'instant du présent t.

Le dispositif comprend une Table LUT 13 (LOOK UP TABLE) qui contient des valeurs tabulées pour fournir immédiatement la valeur

$$S_t^{\;C} = \sigma_B \sqrt{\frac{2}{2-K_{t-1}^C}} \tag{11c}$$

dès qu'on lui introduit la valeur de $\sigma_B$ venant de la Table LUT 11, et la valeur du gain $K_{t-1}^C$ venant de la mémoire MEM 17. La valeur $S_t^C$ constitue le dénominateur de l'expression (5C) qui permet le calcul du coefficient de continuité $\alpha_t^C$. Cette valeur de dénominateur $S_t^C$ est disponible à la sortie de la Table LUT 13 et est introduite dans la Table LUT 14 (LOOK UP TABLE).

Le dispositif comprend une seconde mémoire MEM 10 pour stocker l'intensité filtrée en dernier pour le pixel traité.

A l'instant du présent t, où l'on cherche à calculer l'intensité filtrée $P_t^C$, la mémoire MEM 10 contient donc l'intensité filtrée $P_{t-1}^C$ correspondant à l'instant précédent et fournit donc $P_{t-1}^C$ sur sa sortie.

L'intensité filtrée à l'instant précédent $P_{t-1}^C$ est amenée sur l'additionneur 12 en même temps que l'intensité bruitée $I_t^P$ observée à l'instant t. L'additionneur 12 fournit à sa sortie la différence entre les deux intensités l'une bruitée à l'instant t notée $I_t^P$, l'autre filtrée à l'instant t-1, notée $P_{t-1}^C$.

La Table LUT 14 prend la valeur absolue de la différence fournie par l'additionneur 12, et reçoit en outre le dénominateur $S_t^C$. La Table LUT 14 fournit alors, à sa sortie, l'argument $z^C$ de la fonction $F^C(Z)^C$ :

$$z^C = \frac{\Delta^C}{S_t^c} = \left| \frac{I_t - P_{t-1}^C}{\sigma_B \sqrt{\frac{2}{2-K_{t-1}^C}}} \right| \tag{12c}$$

La Table LUT 15 (LOOK UP TABLE) contient la fonction $F^C(Z)^C$ choisie tabulée. Cette Table LUT 15 reçoit à son entrée l'argument $z^C$ et fournit le coefficient de continuité $\alpha_t^C$

$$\alpha_t^C = F^C \left( \frac{\Delta^C}{S_t^C} \right)$$

La Table LUT 16 contient la formulation tabulée pour fournir le gain à l'instant t à partir du gain de l'instant précédent, provenant de la mémoire MEM 17, et à partir du coefficient de continuité $\alpha_t^C$ arrivant de la Table LUT 15. Ce gain :

$$K_t^{\;C} = \frac{K_{t-1}^C}{K_{t-1}^C + \alpha_t^C} \tag{4c}$$

est fourni en sortie de la Table LUT 16, et est dirigé d'une part vers la mémoire MEM 17 pour remplacer la valeur du gain $K_{t-1}^C$ de l'instant précédent, et d'autre part vers un multiplicateur 19.

La fonction d'intégration (3C) peut maintenant être calculée.

L'additionneur 18 reçoit d'abord le signal bruité observé à l'instant t noté $I_{t-1}^P$ provenant de l'entrée 100 sur une seconde voie, et le signal filtré à l'instant précédant t-1 provenant de la sortie de la mémoire MEM 10, en fournit la différence $I_t^P$- $P_{t-1}^C$.

Cette différence provenant de l'additionneur 18 est amenée sur le multiplicateur 19 en même temps que le gain $K_t^C$ provenant de la Table LUT 16. Le multiplicateur 19 effectue le produit

$$K_t^C \times (I_t^P - P_{t-1}^C)$$

et en fournit le résultat à sa sortie.

L'additionneur 20 reçoit d'une part le produit venant du multiplicateur 19, et d'autre part le signal déjà filtré à l'instant précédent, noté $P_{t-1}^C$, provenant de la mémoire MEM 10. L'additionneur fournit à la sortie générale 200 du filtre, la valeur de l'intensité filtrée à l'instant t. Cette valeur filtrée $P_t^C$ vient aussi remplacer, dans la mémoire MEM 10, l'intensité filtrée à l'instant t-1, qui est introduite par l'entrée 120 de cette mémoire 21, selon l'équation d'intégration :

$$P_t^C = P_{t-1}^C + K_t^C \times (I_t^P - P_{t-1}^C) \tag{3c}$$

On notera que le dispositif décrit plus haut, ne nécessite la mémorisation que de l'échantillon filtré $P_{t-1}^C$ et du gain $K_{t-1}^C$ de l'instant précédent, et ne nécessite en outre que la valeur de l'intensité bruitée $I_t^P$ à l'instant du présent, pour mettre en oeuvre le procédé de filtrage temporel. Il n'est pas indispensable de mémoriser l'intensité arrivant à l'entrée 100.

Après filtrage des différents pixels de l'image du présent, cette image est par exemple rendue visible sur le moniteur 7 du dispositif d'affichage de la FIG.1. Les différentes images de la séquence peuvent ainsi être affichées après leur traitement respectif.

**Revendications**

**1.** Procédé de filtrage temporel du bruit dans une image ($J_t^P$) appelée image du présent, d'une séquence d'images en forme de matrices bidimensionnelles de pixels, lesquels ont des valeurs d'intensité, appelées échantillons ($I_j$ (x,y)), bruitées numérisées,

ce procédé comprenant l'évaluation d'un échantillon filtré ($P_t^C$) appelé échantillon causal filtré du présent, pour reconstruire un échantillon bruité ($I_t^P$) correspondant à un pixel de localisation (x,y) donné, dans l'image du présent, par une combinaison linéaire de l'échantillon bruité du présent ($I_t^P$) et des échantillons antérieurs dans la séquence, appelés échantillons causals bruités ($I_j^C$) affectés de poids ($b_j^c$) qui sont des coefficients de probabilité de continuité d'intensité, de 0 (zéro) à 1, entre ledit échantillon causal bruité auquel le poids est affecté et l'échantillon bruité du présent, le poids affecté à l'échantillon bruité du présent ayant la valeur 1.

**2.** Procédé selon la revendication 1, selon lequel le poids affecté à un échantillon bruité causal donné est le produit des coefficients de probabilité de continuité entre les échantillons causals bruités successifs, de l'échantillon bruité causal donné jusqu'à l'échantillon bruité du présent, et procédé selon lequel la combinaison linéaire des échantillons bruités causals et du présent est normalisée par la somme des poids relatifs auxdits échantillons.

**3.** Procédé selon la revendication 2, selon lequel, pour l'évaluation de l'échantillon causal filtré ($P_t^C$) du présent (t), la combinaison linéaire est réalisée en effectuant l'évaluation d'une relation récursive, appelée relation d'intégration causale, comprenant la détermination d'une somme de l'échantillon causal filtré ($P_{t-1}^C$) de l'instant précédent (t-1) et du produit d'un facteur, appelé facteur de gain causal ($K_t^C$) par une différence entre l'échantillon bruité du présent ($I_t^P$) et l'échantillon causal filtré ($P_{t-1}^P$) de l'instant précédent.

**4.** Procédé selon la revendication 3 selon lequel, ledit facteur ($K_t^C$) de gain causal de l'instant du présent (t) est évalué de manière récursive, par le rapport du facteur de gain causal ($K_{t-1}^C$) de l'instant précédent (t-1) sur la somme dudit facteur de gain causal ($K_{t-1}^C$) de l'instant précédent et d'un coefficient appelé coefficient de continuité causal ($\alpha_t^C$).

**5.** Procédé selon la revendication 4, selon lequel ledit facteur de gain causal ($K_t^C$) est l'inverse de la somme des poids affectés aux échantillons causals de la combinaison linéaire, et le coefficient de continuité causal ($\alpha_t^C$) est le poids de l'échantillon causal ($I_{t-1}^C$) précédant l'échantillon du présent ($I_t^P$).

**6.** Procédé selon l'une des revendications 4 ou 5, selon lequel l'évaluation de la relation d'intégration causale comprend :

la détermination de la valeur absolue d'une différence d'échantillons appelée différence causale ($\Delta^C$) entre l'échantillon bruité ($I_t^P$) de l'instant du présent (t) et l'échantillon causal filtré ($P_{t-1}^C$) de l'instant précédent (t-1), et la détermination du coefficient causal de continuité ($\alpha_t^C$) comme une fonction décroissante ($F^C$) de ladite différence causale ($\Delta^C$).

**7.** Procédé selon la revendication 6, selon lequel, pour l'évaluation du coefficient de continuité causal ($\alpha_t^c$), la fonction décroissante est une fonction appelée causale ($F^C$) dont l'argument ($Z^C$) est donné par la différence causale ($\Delta^C$), normalisée par un facteur ($S_t^c$) égal à la racine carrée du cumul des variances du bruit de chacun des échantillons de la différence, par rapport à la moyenne du bruit.

**8.** Procédé selon la revendication 7, selon lequel la fonction décroissante causale ($F^C$) a une valeur maximale constante inférieure ou égale à 1 lorsque son argument ($z^C$) est compris entre 0 à 1, et décroît vers une valeur minimale égale ou supérieure à zéro, lorsque son argument est supérieur à 1.

**9.** Procédé selon la revendication 8, selon lequel la puissance de filtrage est réglée par les valeurs maximale et minimale de la fonction décroissante causale ($F^C$) choisies pour lisser les pics de bruit, et pour lisser les dents de bruit qui suivent les discontinuités dues à un mouvement spatial.

**10.** Dispositif pour mettre en oeuvre un procédé de filtrage selon l'une des revendications 1 à 9, comprenant :

un système de traitement d'images (5) pour fournir une intensité numérisée bruitée ($I_t^P$) appelée échantillon du présent bruité, d'un pixel [$A_t(x,y)$] ayant une localisation donnée (x,y) dans une image ($J_t^P$) ayant la forme d'une matrice de pixels arrivant à cet instant du présent (t),
et un sous-ensemble, appelé sous-ensemble causal, recevant à son entrée (100) l'échantillon bruité du présent ($I_t^P$), incluant une mémoire (10) pour fournir une intensité numérisée appelée échantillon causal ($I_{t-1}^C$ ; $P_{t-1}^C$) bruité ou filtré du pixel antérieur au pixel du présent, de même localisation (x,y) dans la matrice de l'image antérieure, une mémoire (17) pour fournir un facteur de gain causal ($K_{t-1}^C$), et des moyens de calcul pour évaluer l'équation d'intégration causale, et pour fournir à sa sortie (200) la valeur de l'échantillon causal filtré ($P_t^c$) du présent, qui est l'échantillon filtré pour reconstruire l'échantillon du présent bruité ($I_t^P$).

**11.** Dispositif selon la revendication 10, dans lequel les moyens de calcul, pour l'évaluation de l'équation d'intégration causale et la fourniture de l'échantillon causal filtré ($P_t^C$) comprennent :

un additionneur (12) pour la détermination d'une valeur absolue d'une différence d'échantillons appelée différence causale ($\Delta^C$) entre l'échantillon bruité ($I_t^P$) de l'instant du présent (t) et l'échantillon causal filtré ($P_{t-1}^c$) de l'instant précédent (t-1) mémorisé, et des tables (LUT 13, 14, 15) pour la détermination d'un facteur de continuité causal ($\alpha_t^c$) comme une fonction décroissante ($F^C$) de la différence causale ($\Delta^C$) normalisée par un facteur ($S_t^C$) de la variance du bruit ($\sigma_B$),
une table (LUT 16) pour la détermination d'un facteur ($K_t^c$) appelé facteur de gain causal du présent (t) égal au quotient du facteur de gain causal ($K_{t-1}^C$) de l'instant précédent (t-1) mémorisé, par la somme dudit facteur de gain causal ($K_{t-1}^C$) et du coefficient de discontinuité causal ($\alpha_t^C$),
des additionneurs (18, 20) et multiplicateur (19) pour la détermination de la somme de l'échantillon causal filtré ($P_t^c$) de l'instant précédent (t-1) et du produit dudit facteur de gain causal ($K_t^c$) par une différence entre l'échantillon du présent bruité ($I_t^P$) et l'échantillon causal filtré ($P_{t-1}^c$) de l'instant précédent, donnant ainsi la valeur de l'échantillon causal filtré ($P_t^C$).

**12.** Dispositif incluant un dispositif, selon l'une des revendications 10 ou 11, pour l'aide à l'observation d'une image médicale, comprenant :

un système pour fournir des données d'une image sous forme de matrice bidimensionnelle de pixels ayant des valeurs d'intensité numérisées,
un système d'affichage pour l'affichage de l'image,
un système de traitement d'images ayant accès aux données d'image, et au système d'affichage.

**Patentansprüche**

1. Verfahren zur temporären Rauschfilterung in einem Bild ($J_t^p$), genannt aktuelles Bild, einer Bildfolge in Form von zweidimensionalen Matrizen aus Pixeln, die verrauschte, digitalisierte Intensitätswerte, genannt Muster ($I_j(x,y)$ haben,

   wobei dieses Verfahren die Auswertung eines gefilterten Musters ($P_t^c$), genannt aktuelles gefiltertes kausales Muster, beinhaltet, um ein verrauschtes Muster ($I_t^p$), das einem Pixel mit der gegebenen Position (x,y) in dem aktuellen Bild entspricht, durch eine lineare Verknüpfung des aktuellen verrauschten Musters ($I_t^p$) und der vorherigen Muster, genannt verrauschte kausale Muster ($I_j^c$), in der Folge zu rekonstruieren, denen Gewichtungen ($b_j^c$) zugeordnet sind, die Koeffizienten der Wahrscheinlichkeit der Intensitätskontinuität von 0 (Null) bis 1 sind zwischen dem genannten verrauschten kausalen Muster, dem die Gewichtung zugeordnet ist, und dem aktuellen verrauschten Muster, wobei die dem aktuellen verrauschten Muster zugeordnete Gewichtung den Wert 1 hat.

2. Verfahren nach Anspruch 1, gemäß dem die einem gegebenen verrauschten kausalen Muster zugeordnete Gewichtung das Produkt der Koeffizienten der Wahrscheinlichkeit der Kontinuität zwischen den aufeinander folgenden verrauschten kausalen Mustern ist, von dem gegebenen verrauschten kausalen Muster bis zum aktuellen verrauschten Muster, und gemäß dem die lineare Verknüpfung der verrauschten kausalen und des aktuellen Musters durch die Summe der zu den genannten Mustern gehörigen Gewichtungen normalisiert wird.

3. Verfahren nach Anspruch 2, gemäß dem für die Auswertung des aktuellen (t) gefilterten kausalen Musters ($P_t^c$) die lineare Verknüpfung erfolgt, indem eine rekursive Beziehung, genannt kausale Integrationsbeziehung, ausgewertet wird, was die Bestimmung einer Summe des gefilterten kausalen Musters ($P_{t-1}^c$) zum vorhergehenden Zeitpunkt (t-1) und des Produkts eines Faktors, genannt kausaler Verstärkungsfaktor ($K_t^c$), durch eine Differenz zwischen dem aktuellen verrauschten Muster ($I_t^p$) und dem gefilterten kausalen Muster ($P_{t-1}^c$) zum vorhergehenden Zeitpunkt beinhaltet.

4. Verfahren nach Anspruch 3, gemäß dem der genannte kausale Verstärkungsfaktor ($K_t^c$) des aktuellen Zeitpunkts (t) rekursiv ausgewertet wird durch das Verhältnis des kausalen Verstärkungsfaktors ($K_{t-1}^c$) des vorhergehenden Zeitpunkts (t-1) zur Summe des genannten kausalen Verstärkungsfaktors ($K_{t-1}^c$) des vorhergehenden Zeitpunkts und eines Koeffizienten, genannt kausaler Kontinuitätskoeffizient ($\alpha_t^c$).

5. Verfahren nach Anspruch 4, gemäß dem der genannte kausale Verstärkungsfaktor ($K_t^c$) der Kehrwert der Summe der den kausalen Muster der linearen Verknüpfung zugeordneten Gewichtungen ist, und der kausale Kontinuitätskoeffizient ($\alpha_t^c$) die Gewichtung des kausalen Musters ($I_{t-1}^c$) ist, das dem aktuellen Muster ($I_t^p$) vorausgeht.

6. Verfahren nach einem der Ansprüche 4 oder 5, gemäß dem die Auswertung der kausalen Integrationsbeziehung Folgendes umfasst:

   die Bestimmung des Absolutwerts einer Musterdifferenz, genannt kausale Differenz ($\Delta^c$), zwischen dem verrauschten Muster ($I_t^p$) zum aktuellen Zeitpunkt (t) und dem kausalen gefilterten Muster ($P_{t-1}^c$) zum vorhergehenden Zeitpunkt (t-1)
   und die Bestimmung des kausalen Kontinuitätskoeffizienten ($\alpha_t^c$) als eine abnehmende Funktion ($F^c$) der genannten kausalen Differenz ($\Delta^c$).

7. Verfahren nach Anspruch 6, gemäß dem für die Auswertung des kausalen Kontinuitätskoeffizienten ($\alpha_t^c$) die abnehmende Funktion eine kausal genannte Funktion ($F^c$) ist, deren Argument ($z^c$) sich aus der kausalen Differenz ($\Delta^c$) ergibt, die durch einen Faktor ($S_t^c$), der der Quadratwurzel der laufenden Summe der Varianzen des Rauschens jedes der Muster der Differenz entspricht, im Verhältnis zum Mittelwert des Rauschens normalisiert wird.

8. Verfahren nach Anspruch 7, gemäß dem die abnehmende kausale Funktion ($F^c$) einen konstanten Maximalwert kleiner oder gleich 1 hat, wenn ihr Argument ($z^c$) zwischen 0 und 1 liegt, und die zu einem Minimalwert hin abnimmt, der gleich oder größer Null ist, wenn ihr Argument größer als 1 ist.

9. Verfahren nach Anspruch 8, gemäß dem die Filterungsleistung durch die Maximal- und Minimalwerte der abnehmenden kausalen Funktion ($F^c$) geregelt wird, die so gewählt werden, dass Rauschspitzen geglättet werden und Rauschzacken, die aufgrund einer räumlichen Bewegung den Sprüngen folgen, geglättet werden.

10. Vorrichtung zur Durchführung eines Filterungsverfahrens gemäß einem der Ansprüche 1 bis 9, die Folgendes umfasst:

ein Bildverarbeitungssystem (5), das eine verrauschte digitalisierte Intensität ($I_t^P$), genannt aktuelles verrauschtes Muster, eines Pixels [$A_t(x,y)$] mit einer gegebenen Position (x,y) in einem Bild ($J_t^P$) in Form einer Matrize aus Pixeln liefert, die zu diesem aktuellen Zeitpunkt (t) eintrifft, und ein Teilsystem, genannt kausales Teilsystem, das an seinem Eingang (100) das aktuelle verrauschte Muster ($I_t^P$) empfängt und Folgendes umfasst: einen Speicher (10), der eine digitale Intensität, genannt kausales verrauschtes oder gefiltertes Muster ($I_{t-1}^C$ ; $P_{t-1}^C$) des dem aktuellen Pixel vorangehenden Pixel liefert; einen Speicher (17), der einen kausalen Verstärkungsfaktor ($K_{t-1}^C$) liefert, und Rechenmittel zum Auswerten der kausalen Integrationsgleichung und zum Liefern an seinem Ausgang (200) des Wertes des aktuellen kausalen gefilterten Musters ($P_t^C$), das das gefilterte Muster zur Rekonstruktion des aktuellen verrauschten Musters ($I_t^P$) ist.

**11.** Vorrichtung nach Anspruch 10, wobei die Rechenmittel zur Auswertung der kausalen Integrationsgleichung und zum Liefern des kausalen gefilterten Musters ($P_t^c$) Folgendes umfassen:

eine Addiereinheit (12) zur Bestimmung eines Absolutwertes einer Musterdifferenz, genannt kausale Differenz ($\Delta^C$) zwischen dem verrauschten Muster ($I_t^P$) des aktuellen Zeitpunkts (t) und dem gespeicherten gefilterten kausalen Muster ($P_{t-1}^C$) des vorhergehenden Zeitpunkts (t-1) und Tabellen (LUT 13, 14, 15) zum Bestimmen eines kausalen Kontinuitätsfaktors ($\alpha_t^C$) als abnehmende Funktion ($F^C$) der kausalen Differenz ($\Delta^C$), normalisiert durch einen Faktor ($S_t^C$) der Varianz des Rauschens ($\sigma_B$).
eine Tabelle (LUT 16) zum Bestimmen eines Faktors ($K_t^C$), genannt aktueller (t) kausaler Verstärkungsfaktor, der dem Quotienten des gespeicherten kausalen Verstärkungsfaktors ($K_{t-1}^C$) des vorhergehenden Zeitpunkts (t-1) entspricht, durch die Summe des genannten kausalen Verstärkungsfaktors ($K_{t-1}^C$) und des kausalen Kontinuitätskoeffizienten ($\alpha_t^C$),
Addiereinheiten (18, 20) und eine Multipliziereinheit (19) zum Bestimmen der Summe des gefilterten kausalen Musters ($P_{t-1}^C$) des vorhergehenden Zeitpunkts (t-1) und des Produkts des genannten kausalen Verstärkungsfaktors ($K_t^C$) mit einer Differenz zwischen dem aktuellen verrauschten Muster ($I_t^P$) und dem gefilterten kausalen Muster ($P_{t-1}^C$) des vorhergehenden Zeitpunkts, woraus sich der Wert des gefilterten kausalen Musters ($P_t^c$) ergibt.

**12.** Vorrichtung, die ein System gemäß einem der Ansprüche 10 oder 11 beinhaltet, das die Beobachtung eines medizinischen Bildes unterstützt und Folgendes umfasst:

ein System, das Daten eines Bildes in Form einer zweidimensionalen Matrix aus Pixeln mit digitalen Intensitätswerten liefert,
ein Anzeigesystem zur Anzeige des Bildes,
ein Bildverarbeitungssystem, das Zugriff auf die Bilddaten und das Anzeigesystem hat.

## Claims

**1.** A method for the temporal filtering of the noise in an image ($J_t^P$) which is referred to as the present image and forms part of a sequence of images in the form of two-dimensional matrices of pixels which have digitized, noisy intensity values which are referred to as samples ($I_j(x,y)$),
which method comprises the evaluation of a filtered sample ($P_t^C$), referred to as a present filtered causal sample, in order to reconstruct a noisy sample ($I_t^P$), corresponding to a pixel in a given location (x,y) in the present image, by linear combination of the present noisy sample ($I_t^P$) and earlier samples in the sequence, referred to as noisy causal samples ($I_j^C$) with weights ($b_j^c$) which constitute coefficients of probability of intensity continuity from 0 to 1 between said noisy causal sample whereto the weight is attached and the present noisy sample, the weight attached to the present noisy sample having the value 1.

**2.** A method as claimed in Claim 1, in which the weight attached to a given causal noisy sample is the product of coefficients of probability of continuity between the successive noisy causal samples, from the given causal noisy sample until the present noisy sample, and in which the linear combination of the causal noisy samples and present samples is normalized by the sum of the weights relating to said samples.

**3.** A method as claimed in Claim 2, in which for the evaluation of the filtered causal sample ($P_t^C$) of the present (t) the linear combination is formed by performing the evaluation of a recursive relation, referred to as a causal integration relation, comprising the determination of a sum of the filtered causal sample ($P^C_{t-1}$) of the preceding instant (t-1) and the product of a factor, referred to as a causal gain factor ($K^C_t$), and a difference between the present noisy sample ($I^P_t$) and the filtered causal sample ($P^C_{t-1}$) of the preceding instant.

4. A method as claimed in Claim 3, in which said causal gain factor ($K^C_t$) of the present instant (t) is evaluated in a recursive manner by the ratio of the causal gain factor ($K^C_{t-1}$) of the preceding instant (t-1) to the sum of said causal gain factor ($K^C_{t-1}$) of the preceding instant and a so-called causal continuity coefficient ($\alpha^c_t$).

5. A method as claimed in Claim 4, in which said causal gain factor ($K^C_t$) is the inverse of the sum of the weights attached to the causal samples of the linear combination, and the causal continuity coefficient ($\alpha^C_t$) is the weight of the causal sample ($I^c_{t-1}$) preceding the present sample ($I^P_t$).

6. A method as claimed in one of the Claims 4 or 5, in which the evaluation of the causal integration relation comprises:

   - the determination of the absolute value of a so-called causal difference ($\Delta^C$) between the noisy sample ($I^P_t$) of the present instant (t) and the filtered causal sample ($P^C_{t-1}$) of the preceding instant,
   - and the determination of the causal continuity coefficient ($\alpha^C_t$) as a decreasing function (FC) of said causal difference ($\Delta^C$).

7. A method as claimed in Claim 6, in which for the evaluation of the causal continuity coefficient ($\alpha^c_t$) the decreasing function is a so-called causal function ($F^C$) whose argument ($Z^C$) is given by the causal difference ($\Delta^C$), normalized by a factor ($S^c_t$) equal to the square root of the cumulation of the variances of the noise of each of the samples of the difference with respect to the mean noise.

8. A method as claimed in Claim 7, in which the causal decreasing function ($F^C$) has a constant maximum value smaller than or equal to 1 when its argument ($z^C$) is between 0 and 1 and decreases to a minimum value equal to or larger than zero when its argument is larger than 1.

9. A method as claimed in Claim 8, in which the filtering power is controlled by the maximum and minimum values of the causal decreasing function ($F^C$) which are chosen so as to smooth the noise peaks and to smooth the noise teeth which follow the discontinuities due to a spatial movement.

10. A device for carrying out a filtering method as claimed in one of the Claims 1 to 9, comprising:

   - an image processing system (5) for supplying a noisy digitized intensity ($I^P_t$), referred to as the noisy present sample, of a pixel [$A_t(x,y)$] having a given location (x,y) in an image ($J^P_t$) in the form of a matrix of pixels arriving at said present instant (t),
   - and a sub-assembly, referred to as a causal sub-assembly, whose input (100) receives the present noisy sample ($I^P_t$) and which comprises a memory (10) for supplying a digitized intensity, referred to as a noisy or filtered causal sample ($I^C_{t-1}$; $P^C_{t-1}$) of the pixel preceding the present pixel, in the same location (x,y) in the matrix of the preceding image, a memory (17) for supplying a causal gain factor ($K^C_{t-1}$), and calculation means for evaluating the causal integration equation and for delivering on its output (200) the value of the present filtered causal sample ($P^c_t$), being the sample filtered in order to reconstruct the noisy present sample ($I^P_t$).

11. A device as claimed in Claim 10, in which the calculation means for evaluating the causal integration equation and for supplying the filtered causal sample ($P^C_t$) comprise:

   an adder (12) for determining an absolute value of a so-called causal difference ($\Delta^C$) between the noisy sample ($I^P_t$) of the present instant (t) and the stored filtered causal sample ($P^C_{t-1}$) of the preceding instant (t-1), and tables (LUT 13, 14, 15) for determining a causal continuity factor ($\alpha^c_t$) as a decreasing function ($F^C$) of the causal difference ($\Delta^C$) normalized by a factor ($S^C_t$) of the variance of the noise ($\sigma_B$), a table (LUT 16) for determining a factor ($K^c_t$), referred to as a causal gain factor of the present (t) and equal to the quotient of the stored causal gain factor ($K^C_{t-1}$) of the preceding instant (t-1) and the sum of said causal gain factor ($K^C_{t-1}$) and the causal discontinuity coefficient ($\alpha^C_t$), adders (18, 20) and a multiplier (19) for determining the sum of the filtered causal sample ($P^c_{t-1}$) of the preceding instant (t-1) and the product of said causal gain factor ($K^c_t$) and a difference between the noisy present sample ($I^P_t$) and the filtered causal sample ($P^C_{t-1}$) of the preceding instant, thus producing the value of the filtered causal

sample ($P_t^C$).

**12.** A device which includes a device as claimed in one of the claims 10 or 11 for aiding the observation of a medical image, comprising

a system for supplying data of an image in the form of a two-dimensional matrix of pixels having digitized intensity values,
a display system for displaying the image,
an image processing system having access to the data of the image and to the display system.

FIG.1

FIG.2

FIG. 3A

FIG. 3B

FIG.4A

FIG.4B

FIG.4C

FIG.5A

$A_j(x,y)$

$W_j(x,y)$

$J_j$

$\tilde{\sigma}^2_{BW}$

| | | | |
|---|---|---|---|
| $N_{70}$ | $N_{71}=10$ | $N_{72}$ | $N_{73}$ |
| $N_{60}$ | $N_{61}=20$ | $N_{62}$ | $N_{63}$ |
| $N_{50}$ | $N_{51}=40$ | $N_{52}$ | $N_{53}$ |
| $N_{40}$ | $N_{41}=50$ | $N_{42}$ | $N_{43}$ |
| $N_{30}$ | $N_{31}=35$ | $N_{32}$ | $N_{33}$ |
| $N_{20}$ | $N_{21}=20$ | $N_{22}$ | $N_{23}$ |
| $N_{10}$ | $N_{11}=10$ | $N_{12}$ | $N_{13}$ |
| $N_{00}$ | $N_{01}=0$ | $N_{02}$ | $N_{03}$ |

64, 49, 36, 25, 16, 9, 4, 1

0   10   20   30   40

$m_w(x,y)$

FIG.5 B

FIG.5C

$10 \leqslant m_w(x,y) < 20$

N

50, 40, 30, 20, 10

1   4   9   16   25   36   49   64   $\tilde{\sigma}^2_{BW}$

FIG.6A

FIG.6B

FIG.6C

FIG.6D

FIG.7